(19)

**Europäisches Patentamt**
**European Patent Office**
**Office européen des brevets**

(11)  **EP 3 144 141 B2**

(12)  # NEW EUROPEAN PATENT SPECIFICATION
After opposition procedure

(45)  Date of publication and mention
of the opposition decision:
**29.12.2021  Bulletin 2021/52**

(45)  Mention of the grant of the patent:
**01.08.2018  Bulletin 2018/31**

(21)  Application number: **16001949.3**

(22)  Date of filing: **07.09.2016**

(51)  Int Cl.:
**B32B 17/10** (2006.01)

(54)  **LAMINATED GLASS**

VERBUNDGLAS

VERRE FEUILLETÉ

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30)  Priority:  **07.09.2015  JP 2015175620**

(43)  Date of publication of application:
**22.03.2017  Bulletin 2017/12**

(73)  Proprietor: **AGC Inc.**
**Tokyo 100-8405 (JP)**

(72)  Inventors:
 • **Notsu, Keiji**
  **Tokyo, 100-8405 (JP)**
 • **Nishihama, Jiro**
  **Tokyo, 100-8405 (JP)**
 • **Sadakane, Shunsuke**
  **Tokyo, 100-8405 (JP)**
 • **Narita, Makoto**
  **Tokyo, 100-8405 (JP)**
 • **Nakagawa, Koji**
  **Tokyo, 100-8405 (JP)**
 • **Sakai, Yusuke**
  **Tokyo, 100-8405 (JP)**
 • **Hatano, Maya**
  **Tokyo, 100-8405 (JP)**

(74)  Representative: **Müller-Boré & Partner**
**Patentanwälte PartG mbB**
**Friedenheimer Brücke 21**
**80639 München (DE)**

(56)  References cited:
**EP-A1- 1 254 866**       **EP-B1- 0 437 730**
**EP-B1- 1 561 619**       **WO-A1-2014/052229**
**WO-A1-2014/168246**      **WO-A1-2015/092385**
**WO-A1-2016/196546**      **WO-A2-2015/031594**
**WO-A2-2015/057552**      **GB-A- 2 011 316**
**JP-A- 2015 101 044**     **US-A- 3 558 415**
**US-A- 3 592 726**        **US-A- 3 772 135**
**US-A- 4 985 099**        **US-A1- 2012 094 084**
**US-A1- 2013 295 357**    **US-A1- 2014 087 159**
**US-A1- 2014 226 090**    **US-A1- 2016 060 164**

 • **Online translation of the description of JP
  2012-101999**
 • **Bradt et al: "Fracture Mechanics of Ceramics.
  Active Materials, Nanoscale materials,
  Composites. Glass and Fundamentals", , 2005,
  pages 77-91,**
 • **Tang, Zhongi et al: "Methods for measurement
  and statistical analysis of the frangibility of
  strengthened glass", Frontiers in Materials, vol.
  50, no. 2, 24 June 2015 (2015-06-24),**
 • **Tank et al: "Automated Apparatus for Measuring
  the Frangibility and Fragmentation of
  Strengthened Glass", Experimental Mechanics,
  vol. 54, 2014, pages 903-912,**

**Description**

The present invention relates to a laminated glass.

Laminated glass has been widely used for windowpanes and as glazing in application to transportation vehicles such as automobiles, transit rail cars and airplanes, and in application to architectural structures. The glazing is a transparent or translucent member of a wall or other structures. One and/or two glass plates used for a laminated glass are often strengthened by air cooling for a purpose of enhancing mechanical strength such as scratch resistance, thereby forming surface compressive stress. In transportation uses in particular, recent years have seen weight-reduction requirements for laminated glass currently in use from the viewpoint of enhancing fuel efficiency and traveling stability.

In general, forming laminated glass through the use of a thin glass plate might be conducive to achieving light weight, but there arises a problem that, when a thin glass plate is used, a temperature difference is hard to make between the surface of the glass and the interior of the glass, and hence it is difficult to form surface compressive stress by air cooling for strengthening.

As a solution to this problem, Patent Document 1 has disclosed a laminated glass using a glass plate strengthened by chemical strengthening. To be more specific, therein has been disclosed a glass laminate having a polymeric intermediate layer formed on a first main surface of a first chemically-strengthened glass plate, in which a compressive stress (hereinafter abbreviated as "CS") at the surface of the first glass plate is greater than 300 MPa.

Patent Document 1: JP-T-2013-540621

However, as disclosed in Patent Document 1, greater CS can be formed in the case of strengthening a glass plate by chemical strengthening as compared to the case of strengthening the glass plate by air cooling, and pairing off with the CS, a tensile stress generated in the interior of a glass plate (hereinafter also referred to as Central Tension and abbreviated as "CT") also becomes greater in the case of chemically-strengthened glass plate than in the case of the glass plate strengthened by air cooling. In addition, the depth of CS (hereinafter also referred to as Depth of Layer and abbreviated as "DOL") is smaller in the case of chemical strengthening than in the case of strengthening by air cooling.

In other words, immediately after formation of flaws having a depth of DOL or greater, cracks rapidly grow to everywhere throughout the in-plane of the glass plate because of high CT, thereby causing breakage of the glass plate. Even when the glass plate is broken, the laminated glass is held by a window frame as its plate form is kept because the glass plate is bonded to the intermediate film.

Thus, a flaw having a depth of DOL or greater once formed at a certain site causes growth of cracks in all directions, whereby it becomes difficult to visually identify an object such as a landscape, through the laminated glass.

In light of such a background, an object of the present invention is to provide a laminated glass in which a chemically-strengthened glass is used, nevertheless, through which objects will be easy to visually identify even when the chemically-strengthened glass suffers flaws having a depth of DOL or greater.

In order to achieve the above-described object, the present invention provides a laminated glass including a first glass plate, a second glass plate and an intermediate layer provided between the first glass plate and the second glass plate, in which the first glass plate has a first face and a second face opposing the first face, the second glass plate has a third face and a fourth face opposing the third face, the intermediate layer is provided between the second face and the third face, the second glass plate is a chemically-strengthened glass,

in the second glass plate, when a compressive stress on the third face is denoted as $CS_{(3)}$, a tensile stress generated in an interior of the second glass plate is denoted as CT, a thickness of the second glass plate is denoted as t, a depth of the compressive stress on a side of the third face is denoted as $DOL_{(3)}$ and a depth of a compressive stress on a side of the fourth face is denoted as $DOL_{(4)}$, $CS_{(3)}/[CT^2 \times \{t-(DOL_{(3)}+DOL_{(4)})\}]$ is greater than 1.1 $MPa^{-1} \times mm^{-1}$, the $DOL_{(3)}$ of the second glass plate is smaller than 20 $\mu m$, and the thickness of the second glass plate is from 0.4 mm to 0.7 mm.

According to the present invention, it is possible to provide a laminated glass in which a chemically-strengthened glass is used, nevertheless, through which objects are easy to visually identify even when flaws having a depth of DOL or greater are formed.

Fig. 1 is a cross-sectional view showing schematically a structure of a laminated glass of the present invention.
Fig. 2 is a diagram showing the stress profile of a chemically-strengthened second glass plate in accordance with an embodiment of the present invention.
Fig. 3 is a schematic diagram illustrating a method for a striker drop test.
Fig. 4 is a photograph showing a result of the striker drop test (in Example 1).
Fig. 5 is a photograph showing a result of the striker drop test (in Example 2).
Fig. 6 is a photograph showing a result of the striker drop test (in Comparative Example 1).
Fig. 7 is a photograph showing a result of the striker drop test (in Comparative Example 2).

An embodiment of the laminated glass according to the present invention is explained below with reference to the drawings. In the following explanation, though the case of using the laminated glass as windowpanes of a vehicle is described as one example, the present invention should not be construed as being limited to this case. For example, the laminated glass according to the present invention may be used as windowpanes of buildings, glazing or decorative plates for the interiors or exteriors of vehicles.

Additionally, in this description, a defect formed on the glass surface is expressed in the term "flaw", while a fissure extending from the tip of a flaw is expressed in the term "crack".

(First embodiment)

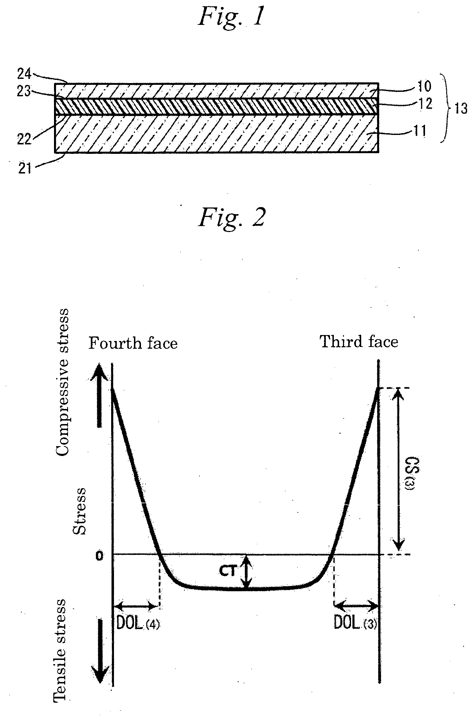

Fig. 1 is a cross-sectional view showing schematically the structure of a laminated glass 13 according to an embodiment of the present invention. As shown in Fig. 1, the laminated glass 13 according to an embodiment of the present invention is structured to include a first glass plate 11, a second glass plate 10 and an intermediate layer 12 provided between the first glass plate 11 and the second glass plate 10.

The first glass plate 11 has a first face 21 and a second face 22 opposing the first face 21. And the second glass plate 10 has a third face 23 and a fourth face 24 opposing the third face 23. The intermediate layer 12 is provided between the second face 22 of the first glass plate 11 and the third face 23 of the second glass plate 10, and bonds both the glass plates. In other words, the second face 22 and the third face 23 are bonding faces, and the first face 21 and the fourth face 25 are exposed faces.

Incidentally, in this embodiment, the first face 21 is situated on the outside of a vehicle and the fourth face 24 is situated on the inside of the vehicle.

The second glass plate 10 is a chemically-strengthened glass plate. In the second glass plate 10, when the CS on the third face 23 is denoted as $CS_{(3)}$, the tensile stress generated in the interior of the second glass plate 10 is denoted as CT, the thickness of the second glass plate 10 is denoted as t, the DOL on the side of the third face 23 is denoted as $DOL_{(3)}$ and the DOL on the side of the fourth face 24 is denoted as $DOL_{(4)}$, $CS_{(3)} / [CT^2 \times \{t - (DOL_{(3)} + DOL_{(4)})\}]$ is greater than 1.1 $MPa^{-1} \times mm^{-1}$, preferably greater than 1.6 $MPa^{-1} \times mm^{-1}$, more preferably greater than 2.1 $MPa^{-1} \times mm^{-1}$, particularly preferably greater than 3.3 $MPa^{-1} \times mm^{-1}$, most preferably greater than 5.1 $MPa^{-1} \times mm^{-1}$.

By the way, in this description, when $DOL_{(3)}$ and $DOL_{(4)}$ are mentioned without making any distinction between them, they are denoted simply as "DOL". In addition, while CS on the fourth face 24 of the second glass plate 10 is denoted as $CS_{(4)}$, when $CS_{(3)}$ and $CS_{(4)}$ are mentioned without making any distinction between them, they are denoted simply as "CS".

By adjusting $CS_{(3)} / [CT^2 \times \{t - (DOL_{(3)} + DOL_{(4)})\}]$ to be greater than 1.1 $MPa^{-1} \times mm^{-1}$, it becomes possible to inhibit cracks from progressing to everywhere throughout the in-plane of the glass plate even when the second glass plate 10 suffers flaws having a depth of DOL or greater. As a result, it becomes easy to visually identify an object through the laminated glass 13.

The present inventors have conceived that, when the fourth face 24 of the chemically-strengthened second glass plate 10 suffers flaws having a depth of $DOL_{(4)}$ or greater (e.g. through a collision with a sharp substance possessed by a vehicle occupant), balances concerning Cs and CT respectively contribute to prevention of progression of cracks throughout the in-plane of the glass plate.

More specifically, when CT is small, the driving force for progression of cracks becomes small, whereby progression of cracks can be inhibited. In addition, the present inventors have found experimentally that great $CS_{(3)}$ of the third face 23 also contributes to inhibition of progression of cracks. Although reasons for such a contribution are uncertain, it can be interpreted that, even if an in-plain progression of cracks in a glass plate begins to be induced by the crack progression driving force enhanced by CT to an extent of exceeding the physical properties intrinsically possessed by the material, the progression of cracks will be inhibited as long as the $CS_{(3)}$ of the third face 23 is great.

Based on the interpretation mentioned above, the present inventors have derived the following correlating equation by the use of $CS_{(3)}$, CT, t, $DOL_{(3)}$ and $DOL_{(4)}$. Fig. 2 is a diagram illustrating a stress profile of the chemically-strengthened second glass plate 10 according to an embodiment of the present invention. In the stress profile of the second glass plate 10 shown in Fig. 2, the compressed portion is assumed to be triangular in shape and the portion under tension is assumed to be rectangular in shape. And tension energy arising from CT is calculated based on the elastic energy equation relating to the stress in the interior of the glass plate.

As a result, considering the term of the portion affected by chemical strengthening, the tension energy arising from CT is found to be $CT^2 \times \{t - (DOL_{(3)} + DOL_{(4)})\}$. Accordingly, an expression obtained by dividing the $CS_{(3)}$ acting as a crack progression inhibiting factor by the tension energy arising from CT acting as a driving force for crack progression, $CT^2 \times \{t - (DOL_{(3)} + DOL_{(4)})\}$, namely, $CS_{(3)}/[CT^2 \times \{t - (DOL_{(3)} + DOL_{(4)})\}]$, is defined as the correlation equation.

In addition, $CS_{(3)}/[CT^2 \times \{t - (DOL_{(3)} + DOL_{(4)})\}]$ has no particular restriction as to its upper limit, but the suitable upper limit is generally 1,700 $MPa^{-1} \times mm^{-1}$ or below, preferably 1,300 $MPa^{-1} \times mm^{-1}$ or below, more preferably 1,000 $MPa^{-1} \times mm^{-1}$ or below.

By the way, in this description, CT is given by the following expression.

$$CT = (CS_{(3)} \times DOL_{(3)} + CS_{(4)} \times DOL_{(4)}) \div [2 \times \{t - (DOL_{(3)} + DOL_{(4)})\}]$$

The $CS_{(3)}$ on the third face 23 of the second glass plate 10 is preferably 300 MPa or greater, more preferably 350 MPa or greater, still more preferably 400 MPa or greater. As long as the $CS_{(3)}$ on the third face 23 is 300 MPa or greater, sufficient surface compressive stress can be formed in the third face 23, whereby in-plane progression of cracks made on the side of the fourth face 24 can be more effectively inhibited from occurring. In addition, a break inducible in the third face 23 at the time of e.g. shutting vehicle's door by strong force can be inhibited.

In addition, the CT can be made small when the $CS_{(3)}$ on the third face 23 is adjusted preferably to 800 MPa or smaller, more preferably 700 MPa or smaller, still more preferably 600 MPa or smaller. On the other hand, the $CS_{(4)}$ on the fourth face 24 of the second glass plate 10 is preferably 300 MPa or greater, more preferably 350 MPa or greater, still more preferably 400 MPa or greater. As long as the $CS_{(4)}$ on the fourth face 24 is 300 MPa or greater, sufficient surface compressive stress can be formed in the fourth face 24, whereby the fourth face 24 becomes impervious to suffering flaws. Incidentally, the $CS_{(4)}$ on the fourth face 24 has no particular restriction as to its upper limit, but it is generally 1,500 MPa or below.

The $DOL_{(4)}$ in the fourth face 24 of the second glass plate 10 is preferably 2 $\mu$m or greater, more preferably 5 $\mu$m or greater. As long as the $DOL_{(4)}$ is 2 $\mu$m or greater, flaws that the laminated glass 13 likely suffers under conditions in general uses are difficult to grow to the depth of $DOL_{(4)}$ or greater. Further, by adjusting the $DOL_{(4)}$ of the second glass plate 10 to be 5 $\mu$m or greater, the second glass plate 12 used e.g. in a vehicle can easily withstand the stress generated at the time of shutting a vehicle's door by strong force.

Now, as an example of flaws that the fourth face 24 likely suffers under conditions in general uses of the laminated glass 13, mention may be made of flaws generated at the time when the laminated glass is used for a vehicle's up-and-down windowpane and grains of sand enter into a clearance between the laminated glass and a guide rail for the up-and-down windowpane to cause rubbing against the laminated glass.

The $DOL_{(4)}$ in the fourth face 24 of the second glass plate 10 is preferably smaller than 40 $\mu$m, more preferably smaller than 30 $\mu$m, still more preferably smaller than 20 $\mu$m, far preferably 17 $\mu$m or smaller, further preferably 15 $\mu$m or smaller. As long as the $DOL_{(4)}$ is smaller than 40 $\mu$m, CT can be made small.

In addition, the $DOL_{(3)}$ in the third face 23 of the second glass plate 10 is smaller than 20 $\mu$m, preferably 17 $\mu$m or smaller, further preferably 15 $\mu$m or smaller. As long as the $DOL_{(3)}$ is smaller than 20 $\mu$m, CT can be made small, whereby in-plane progression of cracks generated on the side of the fourth face 24 can be inhibited from occurring.

Further, $DOL_{(3)}$ in the third face 23 may be smaller than the $DOL_{(4)}$ in the fourth face 24. By adjusting to be $DOL_{(3)} < DOL_{(4)}$, the CT can be made small. On the other hand, the $CS_{(3)}$ on the third face 23 and the $CS_{(4)}$ on the fourth face 24 may be the same or different in their values. Likewise, the $DOL_{(3)}$ in the third face 23 and the $DOL_{(4)}$ in the fourth face 24 may be the same or different in their values.

For example, in the case where the second glass plate 10 is a float glass having a bottom face which has been in contact with molten metal at the time of float forming and a top face opposing the bottom face, the $CS_{(3)}$ on the third face 23 (e.g. the bottom face) and the $CS_{(4)}$ on the fourth face 24 (e.g. the top face) may be different in their values. Likewise, the $DOL_{(3)}$ in the third face 23 and the $DOL_{(4)}$ in the fourth face 24 may be different in their values.

For example, it is possible to impart different values to CS's as well as DOL's of the third face 23 and the fourth face 24 by, to begin with, subjecting only the third face 23 to chemical strengthening treatment, then stopping the chemical strengthening treatment for the third face 23, and thereafter subjecting only the fourth face 24 to chemical strengthening treatment. According to such a method, the stress on the third face 23 varies depending on the temperature at which chemical strengthening treatment of the fourth face 24 is performed, and the $CS_{(3)}$ becomes smaller than the $CS_{(4)}$, while the $DOL_{(3)}$ becomes greater than the $DOL_{(4)}$.

Adjusting the third face 23 and the fourth face 24 to have mutually different CS values and mutually different DOL values is based on a thought that the third face 23 and the fourth face 24 should be adjusted to have their individual CS values and their individual DOL values appropriate to characteristics required of the third face 23 and the fourth face 24 respectively.

More specifically, though it is hardly thought that the third face 23 has a chance to be brought into contact with grains of sand or a sharp substance possessed by a vehicle occupant, the third face 23 is required to resist cracking occurring e.g. at the time of shutting a vehicle's door by strong force. In addition, the third face 23 is required to get such $CS_{(3)}$ as to inhibit in-plane progression of cracks. Further, in order not to excessively increase CT, values of $CS_{(3)}$ and/or $DOL_{(3)}$ are required to be not too great.

On the other hand, the fourth face 24 is required to withstand sliding contact with grains of sand or the like. In addition, the fourth face 24 is required to resist being ruptured e.g. at the time of shutting a vehicle's door by strong force. Further, in order not to excessively increase CT, values of $CS_{(4)}$ and/or $DOL_{(4)}$ are also required to be not too great.

The CT of the second glass plate 10 is preferably 50 MPa or smaller, more preferably 40 MPa or smaller, still more preferably 30 MPa or smaller. As long as the CT is 50 MPa or smaller, progression of cracks can be inhibited. The lower limit of the CT value has no particular restriction, but it is generally 1 MPa or above.

It is preferable that the thickness of the second glass plate 10 is smaller than that of the first glass plate 11. The thickness of the second glass plate 10 is from 0.4 mm to 0.7 mm.

By adjusting the thickness of the second glass plate 10 to be 0.7 mm or smaller, the laminated glass 13 can be reduced in weight. And by adjusting the thickness of the second glass plate 10 to be 0.4 mm or greater, flexural rigidity is enhanced, whereby the second glass plate 10 becomes easy to handle during transportation by a worker.

On the other hand, the thickness of the first glass plate 11 is preferably from 1.5 mm to 4.0 mm, more preferably from 1.7 mm to 3.5 mm, still more preferably from 2.0 mm to 3.0 mm.

By adjusting the thickness of the first glass plate 11 to be 4.0 mm or smaller, the laminated glass 13 can be reduced in weight. And by adjusting the thickness of the first glass plate 11 to be 1.5 mm or greater, sufficient flexural rigidity can be ensured for the laminated glass 13.

In addition, the value obtained by dividing the thickness of the second glass plate 10 by the thickness of the first glass plate 11 is preferably from 0.1 to 0.5, more preferably from 0.13 to 0.48, still more preferably from 0.15 to 0.45. By adjusting the value obtained by dividing the thickness of the second glass plate 10 by the thickness of the first glass plate 11 to fall within a range of 0.1 to 0.5, it becomes possible to obtain the laminated glass 13 having high rigidity and lightweight.

The second glass plate 10 usable in embodiments of the present invention is not limited to particular ones so long as they are ion exchangeable, and it can be chosen as appropriate e.g. from soda-lime glass, aluminosilicate glass or so on.

As an example of the composition of the second glass plate 10, mention may be made of a composition containing, in terms of mol% on the oxide basis: from 50% to 80% of $SiO_2$, from 0% to 10% of $B_2O_3$, 0.1% or more and lower than 6% of $Al_2O_3$, from 3% to 30% of ($Li_2O + Na_2O + K_2O$), from 0% to 25% of MgO, from 0% to 25% of CaO, from 0% to 5% of SrO, from 0% to 5% of BaO, from 0% to 5% of $ZrO_2$ and from 0% to 5% of $SnO_2$, but the glass composition in the present invention should not be construed as being particularly limited to such a composition. Incidentally, the expression of e.g. "from 0% to 25% of MgO" used above means that MgO is not essential for the glass but the MgO can be contained in an amount of up to 25%.

$SiO_2$ is an essential component for forming glass framework. The $SiO_2$ content is preferably from 50% to 80%, more preferably from 55% to 75%, still more preferably from 60% to 70%.

$B_2O_3$ is a component for stabilization of glass, and besides it can enhance anti-devitrification characteristic of glass. The $B_2O_3$ content is preferably from 0% to 10%, more preferably from 0% to 8%, still more preferably zero in a substantial sense. Incidentally, the expression of e.g. "$B_2O_3$ content is preferably from 0% to 10%" means that, though the glass may contain or need not contain $B_2O_3$, the $B_2O_3$ content is preferably 10% or below in the case of containing $B_2O_3$ in the glass.

$Al_2O_3$ is a component having effects of increasing a glass transition temperature (Tg), weather resistance and Young's modulus, and further enhancing ion exchange performance at the glass surface. The $Al_2O_3$ content is preferably 0.1% or more and lower than 6%, more preferably 0.3% or more and lower than 5.5%, still more preferably 0.5% or more and lower than 5.0%.

$Li_2O$ is a component for not only chemically strengthening a glass through replacement of lithium ions mainly with sodium ions under ion exchange treatment but also controlling the thermal expansion coefficient to lower the high-temperature viscosity of the glass, thereby enhancing fusibility and formability of the glass.

It is appropriate that the $Li_2O$ content is 1% or higher. By adjusting the $Li_2O$ content to be 1% or higher, it becomes easy to form the desired surface compressive stress layer by ion exchange treatment. The $Li_2O$ content is preferably 2% or higher, more preferably 4% or higher. However, the $Li_2O$ content higher than 17% causes degradation in weather resistance. Thus, the $Li_2O$ content is preferably 14% or lower, more preferably 13% or lower.

$Na_2O$ is a component for not only chemically strengthening a glass through replacement of sodium ions mainly with potassium ions under ion exchange treatment but also controlling the thermal expansion coefficient to lower the high-temperature viscosity of the glass, thereby enhancing fusibility and formability of the glass.

It is appropriate that the $Na_2O$ content is 1% or higher. By adjusting the $Na_2O$ content to be 1% or higher, it becomes easy to form the desired surface compressive stress layer by ion exchange treatment. The $Na_2O$ content is preferably 3% or higher, more preferably 4% or higher. However, the $Na_2O$ content higher than 17% causes degradation in weather resistance. Thus the $Na_2O$ content is preferably 14% or lower, more preferably 11% or lower.

$K_2O$ is a component for not only enhancing fusibility of glass but also increasing ion exchange rate under chemical strengthening to allow achievement of the desired surface compressive stress and stress layer depth. It is appropriate that the $K_2O$ content is 1% or higher. By adjusting the $K_2O$ content to be 1% or higher, it becomes easy to form the desired surface compressive stress layer by ion exchange treatment. The $K_2O$ content is preferably 3% or higher, more preferably 4% or higher. However, the $K_2O$ content higher than 17% causes degradation in weather resistance. Thus the $K_2O$ content is preferably 14% or lower, more preferably 11% or lower.

($Li_2O + Na_2O + K_2O$) content is preferably from 3% to 30%, more preferably from 5% to 27%, still more preferably from 7% to 25%. By adjusting the (Li$_2$O + Na$_2$O + K$_2$O) content to be 30% or lower, it becomes possible to prevent deterioration in water resistance from occurring after ion exchange treatment. And by adjusting the content thereof to be 3% or higher, the viscosity of fused glass is prevented from becoming too high, whereby it becomes possible to melt or form the glass with ease.

MgO is a component for not only imparting scratch resistance to glass but also enhancing fusibility of glass. The MgO content is preferably from 0% to 25%, more preferably from 0% to 22%, still more preferably from 0% to 20%.

By containing CaO in glass, durability and strength of the glass is enhanced. The CaO content is preferably from 0% to 25%, more preferably from 0% to 22%, still more preferably from 0% to 20%.

SrO is a component effective in not only increasing fusibility of glass but also lowering the liquidus temperature. The SrO content is preferably from 0% to 5%, more preferably from 0% to 3%, still more preferably from 0% to 2%.

BaO is a component effective in not only increasing fusibility of glass but also lowering the liquidus temperature. The BaO content is preferably from 0% to 5%, more preferably from 0% to 3%, still more preferably from 0% to 2%.

As to ZrO$_2$, there are cases where its presence in glass is preferred, because it is a component allowing an increase in ion exchange rate and giving greater chemical durability and hardness to glass. The ZrO$_2$ content is preferably from 0% to 5%, more preferably from 0% to 3%, still more preferably from 0% to 2%.

SnO$_2$ is a component for allowing an increase in weather resistance. The SnO$_2$ content is preferably from 0% to 5%, more preferably from 0% to 3%, still more preferably from 0% to 2%. However, the glass is typically free of SnO$_2$.

As to TiO$_2$, when it is present together with Fe ions in glass, reduction in visible-light transmittance is caused, and there is a potential for the glass to be stained brown. If TiO$_2$ is incorporated into glass, it is appropriate that the TiO$_2$ content is kept to be 1% or lower, and the glass is typically free of TiO$_2$.

Li$_2$O is a component causing a fall in strain point to make stress relaxation occur easily, resulting in no formation of a stable surface compressive stress layer. Accordingly, the Li$_2$O content is preferably 4.3% or lower, more preferably 3% or lower, still more preferably 2% or lower, particularly preferably 1% or lower, and typically 0%.

To be more specific, examples of the glass composition are as follows:

(i) Glass that includes, as a composition represented in mol%: 63 to 73% SiO$_2$; 0.1 to 5.2% Al$_2$O$_3$; 10 to 16% Na$_2$O; 0 to 1.5% K$_2$O; 5 to 13% MgO; and 4 to 10% CaO. (ii) Glass that includes, as a composition represented in mol%, 50 to 74% of SiO$_2$; 1 to 10% of Al$_2$O$_3$; 6 to 14% of Na$_2$O; 3 to 11% of K$_2$O; 2 to 15% of MgO; 0 to 6% of CaO and 0 to 5% of ZrO$_2$, wherein the total content of SiO$_2$ and Al$_2$O$_3$ is 75% or less, wherein the total content of Na$_2$O and K$_2$O is 12 to 25%, and wherein the total content of MgO and CaO is 7 to 15%. (iii) Glass that includes, as a composition represented in mol%: 68 to 80% SiO$_2$; 4 to 10% Al$_2$O$_3$; 5 to 15% Na$_2$O; 0 to 1% K$_2$O; 4 to 15% MgO; and 0 to 1% ZrO$_2$. (iv) Glass that includes, as a composition represented in mol%: 67 to 75% SiO$_2$; 0 to 4% Al$_2$O$_3$; 7 to 15% Na$_2$O; 1 to 9% K$_2$O; 6 to 14% MgO; and 0 to 1.5% ZrO$_2$, wherein the total content of SiO$_2$ and Al$_2$O$_3$ is 71 to 75%, wherein the total content of Na$_2$O and K$_2$O is 12 to 20%, and wherein, if CaO is contained, the content of CaO is less than 1%. (v) Glass that includes, as a composition represented in mol%: 60 to 70% SiO$_2$; 0 to 10% B$_2$O$_3$; 8 to 15% Al$_2$O$_3$; 10 to 17% Na$_2$O; 0 to 3% K$_2$O; 0 to 10% MgO; 0 to 1% CaO; and 0 to 1% ZrO$_2$, wherein the total content of SiO$_2$ and Al$_2$O$_3$ is 76 to 81%, and wherein the total content of Na$_2$O and K$_2$O is 13 to 16%.

For the first glass plate 11 and the second glass plate 10, glass materials having the same kind may be used, or glass materials different in kind may be used. Examples of glass used for the first glass plate 11 include soda-lime glass, alkali-free glass and aluminosilicate glass.

In embodiments of the present invention, it is appropriate that the first glass plate 11 is provided on the side exposed to the outside and the second glass plate 10 is provided on the indoor side. By adopting such an arrangement, the second glass plate 10 becomes impervious to suffering flaws having a depth of DOL or greater (e.g. through collision with sharp substance like flying-off stones).

Additionally, the first glass plate 11 may be an unstrengthened glass plate. However, in order to secure high mechanical strength, the first glass plate 11 may be an air-cooled strengthened glass plate or an air-cooled semi-strengthened glass plate having a lower surface compressive stress (e.g. 50 MPa or below) than the air-cooled strengthened glass plate, or a chemically-strengthened glass plate according to an embodiment of the present invention.

An air-cooled strengthened glass plate is greater in depth of its compressive stress layer as compared with a general chemically-strengthened glass plate, and hence flaws formed therein by collision with flying-off stones or the like are hardly pass through the compressive stress layer. And in the cases of an air-cooled semi-strengthened glass and a chemically-strengthened glass plate according to an embodiment of the present invention, cracks generated from the flaws formed by collision with flying-off stones or the like are hardly made in-plane progression.

The intermediate layer 12 bonds the first glass plate 11 and the second glass plate 10 together. The intermediate layer 12 may be an intermediate film generally used in traditional laminated glass for vehicles, such as polyvinyl butyral (PVB) film or ethylene vinyl acetal (EVA) film. Additionally, the intermediate layer 12 may be a film of thermosetting resin which is in liquid state before being heated. Namely, it is essential only that the intermediate layer is in a state of film when the laminated glass including the intermediate layer is in finished form. For example, the intermediate layer before bonding the glass plates may be in liquid state or the like. Further, an intermediate film having a thickness of e.g. 0.5 mm to 4 mm can be preferably used.

Additionally, an intermediate film formed by mixing an infrared absorbing agent for preventing the temperature elevation on the indoor side may be used. As a material of the infrared absorbing agent, for example, fine particles formed of the following materials are exemplified: metals, oxides, nitrides, sulfides of Sn, Sb, Ti, Si, Zn, Zr, Fe, Al, Cr, Co, Ce, Cs, In, Ni, Ag, Cu, Pt, Mn, Ta, W, V and Mo; and doped materials obtained by doping Sb or F in these materials.

These fine particles can be used alone, or used as a composite. Further, a mixture obtained by mixing a single material of these materials or a composite of these materials in an organic resin, or a covered material obtained by coating the single material or the composite materials with organic resin may be used. Further, as the infrared absorbing agents, a coloring agent, a dye, or an organic material (e.g., phthalocyanine, or naphthalocyanine) may be used.

For preventing oscillation by minute vibration, a sound-insulating intermediate film having a small shear elastic modulus may also be used. The sound-insulating intermediate film may be formed by layer-like laminating films each having a different shear elastic modulus. For preventing a double image in the case of using the laminated glass 13 for a head-up display, the intermediate film may be a wedge-type intermediate film in which at least a part of the cross section thereof has a wedge shape.

The second glass plate 10 may contain a functional film in its surface. The term "functional film" as used herein typically refers to an oxide film, a nitride film, a fluoride film, a metal film or a laminated film consisting of two or more of these films.

Such a functional film may be formed before the second glass plate 10 is chemically strengthened, or it may be formed after the second glass plate 10 has been chemically strengthened. In the case of forming a functional film before the second glass plate 10 is chemically strengthened, depending on the density of the functional film, the functional film plays a role in controlling the degree of the following chemical strengthening, and allows attainment of the $CS_{(3)}/[CT^2 \times \{t-(DOL_{(3)}+DOL_{(4)})\}]$ range defined above.

On the other hand, in the case of forming a functional film after the second glass plate 10 has been chemically strengthened, depending on the temperature at which the functional film is formed, the functional film plays a role in controlling the degree of the following chemical strengthening, and allows attainment of the $CS_{(3)}/[CT^2 \times \{t-(DOL_{(3)}+DOL_{(4)})\}]$ range defined above.

Further, though a functional film has been previously difficult to form on a glass plate having a curved shape, even when the laminated glass 13 has a curved shape, it is possible to form a functional film on the second glass plate 10 by the use of cold bending mentioned later, and the function film can make the most of its effect.

Examples of the oxide mentioned above include, but not limited to, alkali-free oxides such as $TiO_2$ and $SiO_2$, composite oxides containing alkali elements or alkaline-earth elements, such as $LiMnO_4$ or $BaTiO_3$, alkali oxides such as $K_2O$ and $Na_2O$, and inorganic compounds such as ITO.

Examples of the nitride mentioned above include, but not limited to, $Si_3N_4$, AlN and BN.

Examples of the fluoride mentioned above include, but not limited to, $MgF_2$, $CaF_2$, $SrF_2$ and $BaF_2$.

Examples of the metal mentioned above include, but not limited to, Ag and Cu.

The term "alkali-free oxide" as used above refers to the oxide of an element other than alkali metal elements, and is intended to include oxides or composite oxides containing one or more kinds of elements other than alkali metals, mixtures of two or more of such oxides or composite oxides, and layered substances of such oxides or composite oxides.

What is suitable as the alkali-free oxide is an oxide including at least one or more kinds of oxides or composite oxides each containing at least one metal selected from the group consisting of silicon, titanium, tin, aluminum, zinc, chromium, copper, manganese, iron, cobalt, nickel, zirconium, silver, niobium, molybdenum, antimony and indium.

The functional film may be a film containing only an oxide, or it may further contain another compound, such as a nitride, a fluoride or a sulfide, or it may be combined with some element. Further, the film may be a film doped with a small amount of lanthanoid series element or actinoid series element.

Examples of the composite oxide containing an alkali element or an alkaline-earth element include, but not limited to, $LiMnO_4$ and $BaTiO_3$.

The content of an inorganic substance in a functional film is preferably 50 mass% or higher, more preferably 70 mass% or higher. In the functional film containing an inorganic substance, the effect of controlling chemical strengthening can be appropriately achieved by adjusting the inorganic substance content to 50 mass% or higher.

Further, a functional film may contain hydrogen atoms. In the case of containing hydrogen atoms in a functional film, it is appropriate that the hydrogen atom concentration in the functional film is from $1.0 \times 10^{15}$ atom/mm$^3$ to $1.0 \times 10^{19}$ atom/mm$^3$. The presence of hydrogen atoms in the functional film causes a change in internal chemical structure of the film to form paths for ions. In other words, the presence of hydrogen atoms makes it possible to control the extent of inhibition of chemical strengthening.

In addition, by adjusting the hydrogen atom concentration in the functional film to fall within the range of $1.0 \times 10^{15}$ atom/mm$^3$ to $1.0 \times 10^{19}$ atom/mm$^3$, displacement of ions during the chemical strengthening becomes easy, and dense film can be kept.

When the functional film is a functional film containing silver as a main component, the film may contain only silver or a silver alloy containing metals such as palladium. In the case of the silver alloy, viewed from the aspects of thermal barrier and cost, the proportion of metals other than silver in the silver alloy is preferably 10 mass% or lower, more preferably 5 mass% or lower, with respect to the total amount of silver and metals other than silver.

The thickness of a functional film is preferably from 5 nm to 600 nm, more preferably from 10 nm to 400 nm. By adjusting the film thickness to fall within the range of 5 nm to 600 nm, the effect of controlling chemical strengthening can be appropriately achieved.

In the case of a functional film containing silver as a main component, the thickness of the functional film is preferably 11 nm or greater, more preferably 12 nm or greater, still more preferably 13 nm or greater, particularly preferably 14 nm or greater.

Examples of a method for forming the functional film as mentioned above include CVD (Chemical Vapor Deposition) methods, such as a normal atmospheric CVD method and a plasma CVD method, a sputtering method, a wet-coating method and an evaporation method. Of these methods, CVD methods, notably a normal atmospheric CVD method, are preferred over the others from the viewpoint of allowing easy formation of large-area film.

Production methods for the second glass plate 10 have no particular restrictions, and may be chosen as appropriate. Thereto, previously well-known methods can typically be applied.

For example, ingredients are compounded so as to prepare such a composition as mentioned later, and molten by heating with a glass melting furnace. Then the molten matter is homogenized by bubbling, stirring, addition of a refining agent, or so on, formed into a glass plate having a predetermined thickness in accordance with any of previously well-known forming methods, and cooled slowly.

Examples of a method for forming the second glass plate 10 include a float process, a press process, a fusion process and a down-draw process. Of these, a float process suitable for mass production is preferred. And continuous forming methods other than a float process, namely a fusion process and a down-draw process, are also suitable.

The glass formed by such a method is subjected to grinding and polishing treatments as required. In order to make the thus treated glass into the second glass plate 10, the glass is subjected to chemical strengthening, then cleaning, and further drying. Additionally, there is no need to subject the surface of the second glass plate 10 to polishing treatment.

The chemical strengthening of glass is usually performed by immersing a glass plate in a melt of metal salt (e.g. potassium nitrate) containing metal ions having a large diameter (e.g. K ions) to replace metal ions having a small diameter (e.g. Na ions and Li ions) in the glass plate with the metal ions having a large diameter, thereby forming a compressive layer at the surface of the glass plate.

The chemical strengthening can be performed in an immersion process by immersing a glass plate e.g. in a potassium nitrate solution heated to a temperature of 300°C to 550°C for a period of 5 minutes to 20 hours. As ion exchange conditions, optimum ones should be chosen with consideration given to viscosity characteristics, uses and thickness of glass, tensile stress in the interior of glass and so on.

As an example of a method of adjusting the $CS_{(3)}/[CT^2 \times \{t-(DOL_{(3)}+DOL_{(4)})\}]$ of the second glass plate 10 to greater than 1.1 $MPa^{-1} \times mm^{-1}$, mention may be made of a method of immersing a glass plate having the foregoing composition (i) in a 450°C potassium nitrate solution for 50 minutes.

Examples of a molten salt used for carrying out the chemical strengthening include alkali nitrates such as potassium nitrate, alkali sulfates such as sodium sulfate and potassium sulfate, and alkali chlorides such as sodium chloride and potassium chloride. These molten salts may be used alone or as combinations of two or more thereof.

As to the method for producing the first glass plate 11, when the first glass plate 11 is a chemically-strengthened glass plate similarly to the second glass plate 10 according to an embodiment of the present invention, the same method as mentioned above is adopted. When it is an air-cooled strengthened glass plate or an air-cooled semi-strengthened glass plate, the first glass plate 11 can be produced by using any of previously well-known production methods.

The first glass plate 11 and the second glass plate 10 are bonded together via the intermediate layer 12 by means of a publicly known lamination machine, thereby producing a laminated glass 13 according to an embodiment of the present invention. After lamination, depending on the intermediate layer chosen, drying treatment, UV irradiation treatment or the like may be carried out as appropriate.

In a case where the laminated glass 13 has a curved shape, it may be a laminated glass 13 including: a first glass plate 11 being curved in a first curved shape; a second glass plate 10 having a second shape, the second shape being different from the first curved shape; and an intermediate layer 12 bonding the first glass plate 11 and the second glass plate 10. In such a laminated glass 13, two glass plates are bonded together in a state that elastic deformation is caused in either or both of the two glass plates.

Thus, the laminated glass 13 is under bending stress due to elastic deformation when it includes: the first glass plate 11 being curved in a first curved shape; the second glass plate 10 having the second shape, the second shape being different from the first curved shape; and the intermediate layer 12 bonding the first glass plate 11 and the second glass plate 10. In particular, when the thickness of the second glass plate 10 is smaller than that of the first glass plate 11, the bending stress is formed mainly in the second glass plate 10 because the second glass plate 10 is bonded under a state of undergoing elastic deformation. And bending compressive stress is formed in the peripheral area of the second glass plate 10 and bending tensile stress is formed at the center of the in-plane area of the second glass plate 10.

In this description, the term "peripheral area" refers to the area extending in the in-plane direction from the periphery of the glass plate to a width of, for example, 20 mm. The term "in-plane area" refers to the area occupying the inner portion of the plane, surrounded by the peripheral area. Incidentally, the bending compressive stress and the bending tensile stress can be measured with a commercially available surface stress meter. When the second glass plate 10 is a strengthened glass, both residual stress and bending stress are generated at the fourth surface 24 of the second glass plate 10. The residual stress is generated by strengthening treatment prior to bonding treatment. In this case, the stress value after bonding treatment is measured, and from this measured value, the stress value of the second glass plate 10 in a natural state is subtracted to work out the bending stress.

In an embodiment of the present invention, after a first glass plate 11 is formed into a desired curved shape by heat bending, the chemically-strengthened flat second glass plate 10 may be bonded to the first glass plate 11 via the intermediate layer 12. For example, the first glass plate 11 may have a multi-curved shape which is bent in two directions orthogonal to each other and the second glass plate 10 may have a flat shape. By forming the first glass plate 11 into a multi-curved shape, a windowpane for a vehicle excellent in design can be made, so that various design needs for vehicle design can be satisfied. By forming the second glass plate 10 into a flat plate shape, it becomes easy to form a functional film. In addition, the bending process for the second glass plate 10 can be omitted. Details thereon are described later.

By the use of the foregoing laminated-glass production method in which two glass plates one of which has undergone elastic deformation are bonded together (hereafter referred to as cold bending), the following advantages can be obtained. To be more specific, there has previously been known a method for producing functional film-equipped curve-shaped laminated glass, in which a functional film is formed on either or both of two flat glass plates prior to forming treatment, then the two flat glass plates are subjected to bend forming by heating at about their softening temperature, and they are bonded together. However, there were cases where the functional film suffered degradation of its function through the heating at a temperature near the softening temperature of glass plates.

On the other hand, when a functional film is formed on a flat second glass plate 10 first, and then the second glass plate 10 is bonded by cold bending to a first glass plate 11 which has been formed into a desired curved shape, a curved laminated glass can be obtained without heating the functional film up to a temperature near the softening temperature of glass plates; as a result, the functional film can sufficiently perform its function.

As another method for producing a laminated glass having a functional film and having a curved shape, there has been known a method of bending a glass plate into a desired curved shape and then forming a functional film on the curve-shaped glass plate. However, formation of a functional film in such a method is more difficult than formation of a functional film on a flat glass plate, and makes the process and apparatus complicated. In contrast, cold bending allows formation of a functional film on a flat second glass plate 10, whereby the process and apparatus can be simplified.

In addition, the use of cold bending makes it possible to omit a step of bend forming by heating a second glass plate 10 up to a temperature near its softening temperature.

Additionally, the second glass plate 10 used in cold bending may be formed into a second curved shape different from the first curved shape. In an embodiment of the present invention, the radius of curvature of the second curved shape is greater than that of the first curved shape. In an embodiment of the present invention, the second glass plate 10 is subjected to bend forming during the process of chemical strengthening.

More specifically, by making the degree of chemical strengthening larger in the third face 23 than in the fourth face 24, the second glass plate 10 can be bent and formed so that the third face 23 is convex in shape and the fourth face 24 is concave in shape. In this way, the second glass plate 10 is bent and formed during the process of chemical strengthening, whereby it becomes possible to omit the bend forming process of heating the second glass plate 10 up to a temperature near its softening temperature. In addition, by giving a curved shape to the second glass plate 10, a difference in radius of curvature between the first curved shape and the second curved shape can be made small to result in reduction of bending stress generated during the cold bending.

Incidentally, a difference in degree of chemical strengthening can be clarified by comparison between the amount of Na in the third face 23 and the amount of Na in the fourth face 24. The amount of Na in the third face 23 refers to the intensity of the K$\alpha$ orbital as measured by X-ray fluorescence (XRF), and is defined as the amount of Na present in a range of from the surface of the third face 23 to the depth of 3 $\mu$m therefrom. The amount of Na in the fourth face 24 is defined likewise.

The cold bending can be performed by using a laminate of the first glass plate 11, the second glass plate 10 and the intermediate film which are tentatively fixed by a tape or the like, a preliminary compression bonding device, such as a publicly known nip roller or a rubber bag, and an autoclave.

EXAMPLES

The present invention is described in detail below by reference to Examples.

(1) Production of Second Glass Plate

Glass produced by a float process for use in chemical strengthening was cut and divided, and then ground with a #1000 grindstone into glass plates having thicknesses shown in Table 1. Thereafter, the glass plates were subjected to ion exchange treatment by using potassium nitrate under the conditions set forth in Table 1, and then physical properties of the thus obtained chemically-strengthened glass plates were evaluated. As to the glass compositions, those within the range of (i) and (ii) among the compositions exemplified hereinbefore were used.

The surface compressive stress (CS) and the depth of compressive stress (DOL) were measured with a glass surface stress meter (FSM-6000LE, manufactured by ORIHARA INDUSTRIAL CO., LTD.). Additionally, the tensile stress (CT) was calculated from the retardation of a surface compression stress layer, which was measured by making light pass through the chemically-strengthened layer of chemically-strengthened glass by the use of a birefringence imaging system Abrio (manufactured by Tokyo Instruments Inc.), and the photoelastic modulus of the glass.

(2) Production of First Glass Plate

Glass having a composition described below and having a thickness of 2.8 mm was produced by a float process, cut and divided into glass plates. The glass produced was soda-lime glass having the composition containing 65 to 75 mass% of $SiO_2$, 7 to 14 mass% of CaO, 0 to 3.5 mass% of $Al_2O_3$ and 12.0 to 14.5 mass% of the total of $Na_2O$ and $K_2O$.

(3) Production of Laminated Glass

A 0.76 mm-thick PVB sheet as an intermediate layer was stacked on the first glass plate, the second glass plate was further stacked on the PVB sheet, and then they were bonded together, thereby producing a laminated glass.

(4) Evaluation of Cracking

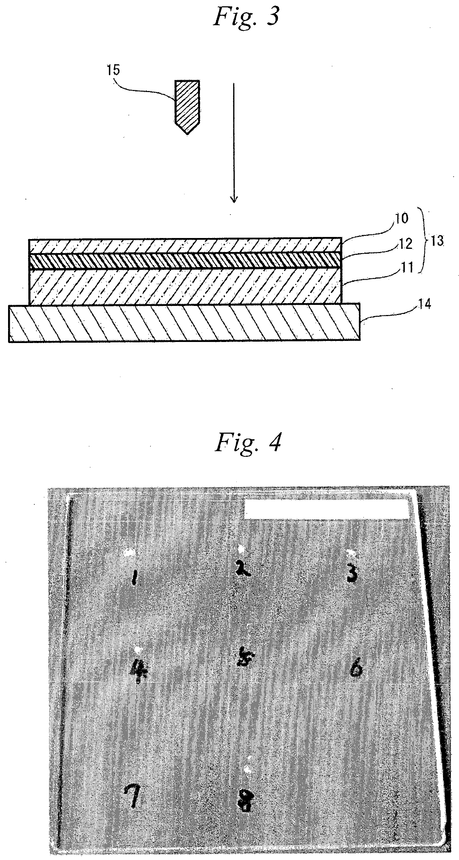

Evaluation of cracking derived from flaws having a depth of DOL or greater which were made in a striker drop test was performed on the laminated glass produced in the foregoing manner. The striker drop test is, as shown in Fig. 3, a test that a laminated glass produced by bonding a second glass plate 10 having a compressive stress layer formed in the surface thereof and a first glass plate 11 together via the intermediate layer 12 is placed on a base 14 and a striker 15 such as diamond is dropped from above onto the laminated glass.

It is appropriate that the base 14 is formed of a hard stone like granite. Such a base makes it possible to exclude escape of stress as in the case of a frame-supported cover glass area which tends to suffer flaws as starting points of breaking. However, as to the material for the base 14, its elastic modulus or flexibility can be changed according to the intended purpose, and slate, glass, a frame in which the center thereof is hollowed out, or the like may be chosen as appropriate.

The material and mass of the striker 15 can be changed in response to the intended purpose. As a material for the striker, diamond is typically used. The striker 15 with a sharp tip was used herein.

The laminated glass 13 was placed on the base 14 made of granite so that the first glass plate 11 of the laminated glass 13 came into contact with the base. A striker 15 including diamond and having a sharp tip was dropped from above onto the second glass plate 10 of the laminated glass 13, whereby flaws having a depth of DOL or greater were made, and the extent of progression of cracking was evaluated by visual observations. Results obtained are shown in Table 1 and Figs. 4 to 7. Incidentally, there were cases in which the drop test similar in height from which the striker was dropped was repeated two or more times in order to verify the result obtained.

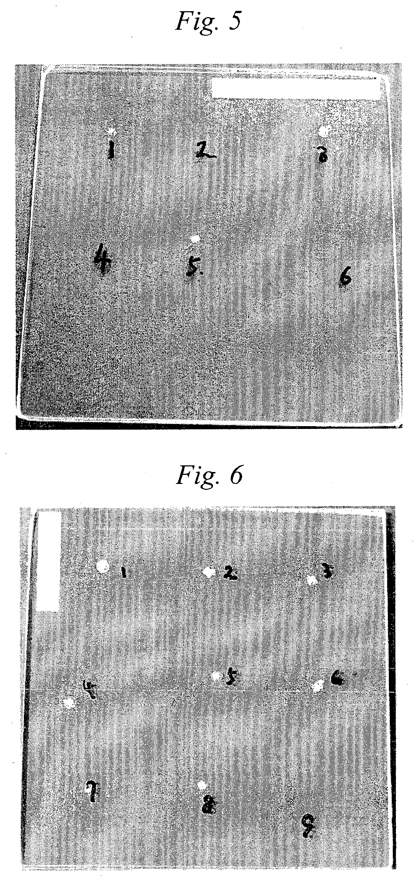

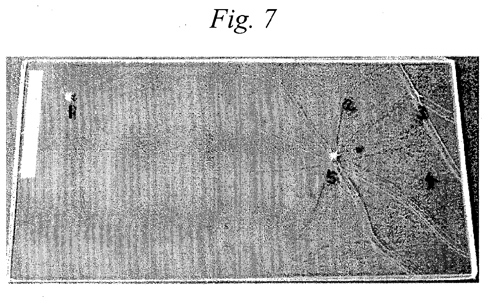

The results of the striker drop test performed in Example 1 are shown in Fig. 4, those in Example 2 are shown in Fig. 5, those in Comparative Example 1 are shown in Fig. 6 and those in Comparative Example 2 are shown in Fig. 7. Conditions under which the striker drop test was performed were set as shown in Table 2. In Table 1, cases where the glass was inhibited from suffering in-plane progression of cracking were rated as "A", while cases where the glass suffered rapid in-plane progression of cracking were rated as "B".

(5) Evaluation of Effectiveness against Scratches on Surface

In each of Examples and Comparative Examples, grains of sand were pressed and rubbed (about 2,000 iterations) against a glass plate surface by a force of about 10 N. Thereafter, the effectiveness against scratches on the surface was evaluated by visual observation of the surface condition. Cases where no scratches were made on the glass surface were rated as "A", while cases where the glass surface got scratches were rated as "B".

Results obtained are shown in Table 1.

Table 1

|  | Example 1 | Example 2 | Comparative Example 1 | Comparative Example 2 |
|---|---|---|---|---|
| Conditions for chemical strengthening | 450°C, 50 minutes | 450°C, 360 minutes | No chemical strengthening | 450°C, 60 minutes |
| Composition | (i) | (i) | (i) | (ii) |
| Thickness t [mm] | 0.51 | 0.51 | 0.51 | 0.56 |
| $CS_{(3)}$ [MPa] | 704 | 601 | 0 | 717 |
| $DOL_{(3)}=DOL_{(4)}$ [$\mu$m] | 6.06 | 15.5 | 0 | 25.4 |
| CT [MPa] | 8.6 | 19.4 | 0 | 35.7 |
| $CS_{(3)}/CT^2 \times \{t-(DOL_{(3)}+DOL_{(4)})\}$] [$MPa^{-1} \times mm^{-1}$] | 19.3 | 3.3 | 0 | 1.1 |
| Thickness t/CT [mm/MPa] | 59.3 | 26.3 | 0 | 15.7 |
| Scratches on surface | A | A | B | A |
| Crack progression | A | A | A | B |

Table 2

|  |  | Drop Height [cm] | | | |
|---|---|---|---|---|---|
|  |  | Example 1 | Example 2 | Comparative Example 1 | Comparative Example 2 |
| Drop Position | 1 | 50 | 20 | 50 | 30 |
|  | 2 | 40 | 15 | 50 | 20 |
|  | 3 | 30 | 20 | 40 | 25 |
|  | 4 | 20 | 15 | 40 | 20 |
|  | 5 | 10 | 20 | 30 | 25 |
|  | 6 | 15 | 15 | 30 | - |
|  | 7 | 15 | - | 20 | - |
|  | 8 | 20 | - | 20 | - |
|  | 9 | - | - | 10 | - |

As shown in Table 1 and Figs. 4 to 7, it was found that, in the laminated glass which was produced in Comparative Example 2 and in which $CS_{(3)}/[CT^2 \times \{t-(DOL_{(3)}+DOL_{(4)})\}]$ was 1.1 $MPa^{-1} \times mm^{-1}$, cracking progressed from flaws having depths of DOL or greater, whereby objects were difficult to be visually identified through the laminated glass. On the other hand, the laminated glass which was produced in each of Examples 1 and 2 and in which $CS_{(3)}/[CT^2 \times \{t-(DOL_{(3)}+DOL_{(4)})\}]$ was greater than 1.1 $MPa^{-1} \times mm^{-1}$ created no progression of cracking even when it suffered flaws having depths of DOL or greater.

In addition, the laminated glass produced in Comparative Example 1, in which no chemical strengthening was carried out, was low in effectiveness against scratches on the surface and insufficient in mechanical strength even for scratches assumed in the case of considering usual uses. Further, when the depths of flaws on the laminated glass produced in Comparative Example 1 were measured, the minimum thereof was about 1.3 $\mu$m and the maximum thereof was about 3.5 $\mu$m.

From these results, it was found that the laminated glass using a chemically-strengthened glass having $CS_{(3)}/[CT^2 \times \{t-(DOL_{(3)}+DOL_{(4)})\}]$ of greater than 1.1 $MPa^{-1} \times mm^{-1}$ as the second glass plate thereof allowed possession of sufficient mechanical strength and easy visual observation of objects through the laminated glass itself even when suffered flaws having depths of DOL or greater.

Description of Reference Numerals and Signs

10: Second glass plate
11: First glass plate
12: Intermediate layer
13: Laminated glass
14: Base
15: Striker

**Claims**

1. A laminated glass comprising a first glass plate, a second glass plate and an intermediate layer provided between the first glass plate and the second glass plate,

   wherein the first glass plate has a first face and a second face opposing the first face,
   the second glass plate has a third face and a fourth face opposing the third face,
   the intermediate layer is provided between the second face and the third face,
   the second glass plate is a chemically-strengthened glass,
   in the second glass plate, when a compressive stress on the third face is denoted as $CS_{(3)}$, a tensile stress generated in an interior of the second glass plate is denoted as CT, a thickness of the second glass plate is denoted as t, a depth of the compressive stress on a side of the third face is denoted as $DOL_{(3)}$ and a depth of a compressive stress on a side of the fourth face is denoted as $DOL_{(4)}$, $CS_{(3)}/[CT^2 \times \{t-(DOL_{(3)}+DOL_{(4)})\}]$ is greater than 1.1 $MPa^{-1} \times mm^{-1}$,
   the $DOL_{(3)}$ of the second glass plate is smaller than 20 $\mu$m, and
   the thickness of the second glass plate is from 0.4 mm to 0.7 mm.

2. The laminated glass according to claim 1, wherein the $CS_{(3)}/[CT^2 \times \{t-(DOL_{(3)}+DOL_{(4)})\}]$ of the second glass plate is greater than 1.6 $MPa^{-1} \times mm^{-1}$.

3. The laminated glass according to claim 1 or 2, wherein the $CS_{(3)}/[CT^2 \times \{t-(DOL_{(3)}+DOL_{(4)})\}]$ of the second glass plate is greater than 2.1 $MPa^{-1} \times mm^{-1}$.

4. The laminated glass according to any one of claims 1 to 3, wherein the $CS_{(3)}$ of the second glass plate is 300 MPa or greater.

5. The laminated glass according to any one of claims 1 to 4, wherein the CT of the second glass plate is 50 MPa or smaller.

6. The laminated glass according to any one of claims 1 to 5, wherein the $DOL_{(4)}$ of the second glass plate is 2 $\mu$m or greater.

7. The laminated glass according to any one of claims 1 to 6, wherein the $DOL_{(4)}$ of the second glass plate is 5 $\mu$m or greater.

8. The laminated glass according to any one of claims 1 to 7, wherein the thickness of the second glass plate is smaller than a thickness of the first glass plate.

9. The laminated glass according to any one of claims 1 to 8, wherein the thickness of the first glass plate is from 1.5 mm to 4.0 mm.

10. The laminated glass according to any one of claims 1 to 9, wherein a value obtained by dividing the thickness of the second glass plate by the thickness of the first glass plate is from 0.1 to 0.5.

**11.** The laminated glass according to any one of claims 1 to 10, wherein the laminated glass is a windowpane,

the first glass plate is provided on a side exposed to an outside, and
the second glass plate is provided on an indoor side.

**12.** The laminated glass according to any one of claims 1 to 11, wherein the second glass plate is bonded to the first glass plate via the intermediate layer in a state where the second glass plate is elastically deformed along a shape of the first glass plate.

**Patentansprüche**

**1.** Laminiertes Glas, umfassend eine erste Glasplatte, eine zweite Glasplatte und eine Zwischenschicht, die zwischen der ersten Glasplatte und der zweiten Glasplatte bereitgestellt ist,

wobei die erste Glasplatte eine erste Fläche und eine zweite Fläche, die der ersten Fläche gegenüberliegt, aufweist,
die zweite Glasplatte eine dritte Fläche und eine vierte Fläche, die der dritten Fläche gegenüberliegt, aufweist,
die Zwischenschicht zwischen der zweiten Fläche und der dritten Fläche bereitgestellt ist,
die zweite Glasplatte ein chemisch gestärktes Glas ist,
in der zweiten Glasplatte, wenn eine Druckspannung an der dritten Fläche mit $CS_{(3)}$ bezeichnet wird, eine Zugspannung, die in einem Inneren der zweiten Glasplatte erzeugt wird, mit CT bezeichnet wird, eine Dicke der zweiten Glasplatte mit t bezeichnet wird, eine Tiefe der Druckspannung an einer Seite der dritten Fläche mit $DOL_{(3)}$ bezeichnet wird und eine Tiefe der Druckspannung an einer Seite der vierten Fläche mit $DOL_{(4)}$ bezeichnet wird, $CS_{(3)}/[CT^2\times\{t-(DOL_{(3)}+DOL_{(4)})\}]$ größer als 1,1 $MPa^{-1}\times mm^{-1}$ ist,
$DOL_{(3)}$ der zweiten Glasplatte kleiner als 20 $\mu$m ist und
die Dicke der zweiten Glasplatte von 0,4 mm bis 0,7 mm beträgt.

**2.** Laminiertes Glas nach Anspruch 1, wobei $CS_{(3)}/[CT^2\times\{t-(DOL_{(3)}+DOL_{(4)})\}]$ der zweiten Glasplatte größer als 1,6 $MPa^{-1}\times mm^{-1}$ ist.

**3.** Laminiertes Glas nach Anspruch 1 oder 2, wobei $CS_{(3)}/[CT^2\times\{t-(DOL_{(3)}+DOL_{(4)})\}]$ der zweiten Glasplatte größer als 2,1 $MPa^{-1}\times mm^{-1}$ ist.

**4.** Laminiertes Glas nach einem der Ansprüche 1 bis 3, wobei $CS_{(3)}$ der zweiten Glasplatte 300 MPa oder größer ist.

**5.** Laminiertes Glas nach einem der Ansprüche 1 bis 4, wobei CT der zweiten Glasplatte 50 MPa oder kleiner ist.

**6.** Laminiertes Glas nach einem der Ansprüche 1 bis 5, wobei $DOL_{(4)}$ der zweiten Glasplatte 2 $\mu$m oder größer ist.

**7.** Laminiertes Glas nach einem der Ansprüche 1 bis 6, wobei $DOL_{(4)}$ der zweiten Glasplatte 5 $\mu$m oder größer ist.

**8.** Laminiertes Glas nach einem der Ansprüche 1 bis 7, wobei die Dicke der zweiten Glasplatte kleiner ist als eine Dicke der ersten Glasplatte.

**9.** Laminiertes Glas nach einem der Ansprüche 1 bis 8, wobei die Dicke der ersten Glasplatte von 1,5 mm bis 4,0 mm beträgt.

**10.** Laminiertes Glas nach einem der Ansprüche 1 bis 9, wobei ein Wert, erhalten durch Teilen der Dicke der zweiten Glasplatte durch die Dicke der ersten Glasplatte, von 0,1 bis 0,5 beträgt.

**11.** Laminiertes Glas nach einem der Ansprüche 1 bis 10, wobei das laminierte Glas eine Fensterscheibe ist,

die erste Glasplatte an einer Seite, die einer Außenseite ausgesetzt ist, bereitgestellt ist, und
die zweite Glasplatte auf einer Innenseite bereitgestellt ist.

**12.** Laminiertes Glas nach einem der Ansprüche 1 bis 11, wobei die zweite Glasplatte an die erste Glasplatte durch die Zwischenschicht in einem Zustand, in dem die zweite Glasplatte entlang einer Form der ersten Glasplatte elastisch verformt ist, gebunden ist.

**Revendications**

1. Verre feuilleté comprenant une première plaque de verre, une deuxième plaque de verre et une couche intermédiaire disposée entre la première plaque de verre et la deuxième plaque de verre,

   dans lequel la première plaque de verre possède une première face et une deuxième face opposée à la première face,
   la deuxième plaque de verre possède une troisième face et une quatrième face opposée à la troisième face,
   la couche intermédiaire est disposée entre la deuxième face et la troisième face,
   la deuxième plaque de verre est un verre renforcé chimiquement,
   dans la deuxième plaque de verre, quand la contrainte de compression sur la troisième face est représentée par $CS_{(3)}$, la contrainte de traction générée à l'intérieur de la deuxième plaque de verre est représentée par CT, l'épaisseur de la deuxième plaque de verre est représentée par t, la profondeur de la contrainte de compression sur un côté de la troisième face est représentée par $DOL_{(3)}$ et la profondeur de la contrainte de compression sur un côté de la quatrième face est représentée par $DOL_{(4)}$, la valeur de $CS_{(3)} / [CT^2 \times \{t - (DOL_{(3)} + DOL_{(4)})\}]$ est supérieure à 1,1 MPa$^{-1}$ × mm$^{-1}$,
   la $DOL_{(3)}$ de la deuxième plaque de verre est inférieure à 20 $\mu$m, et
   l'épaisseur de la deuxième plaque de verre est de 0,4 mm à 0,7 mm.

2. Verre feuilleté selon la revendication 1, dans lequel la valeur de $CS_{(3)} / [CT^2 \times \{t - (DOL_{(3)} + DOL_{(4)})\}]$ de la deuxième plaque de verre est supérieure à 1,6 MPa$^{-1}$ × mm$^{-1}$.

3. Verre feuilleté selon la revendication 1 ou 2, dans lequel la valeur de $CS_{(3)} / [CT^2 \times \{t - (DOL_{(3)} + DOL_{(4)})\}]$ de la deuxième plaque de verre est supérieure à 2,1 MPa$^{-1}$ × mm$^{-1}$.

4. Verre feuilleté selon l'une quelconque des revendications 1 à 3, dans lequel la $CS_{(3)}$ de la deuxième plaque de verre est de 300 MPa ou plus.

5. Verre feuilleté selon l'une quelconque des revendications 1 à 4, dans lequel la CT de la deuxième plaque est de 50 MPa ou moins.

6. Verre feuilleté selon l'une quelconque des revendications 1 à 5, dans lequel la $DOL_{(4)}$ de la deuxième plaque de verre est de 2 $\mu$m ou plus.

7. Verre feuilleté selon l'une quelconque des revendications 1 à 6, dans lequel la $DOL_{(4)}$ de la deuxième plaque de verre est de 5 $\mu$m ou plus.

8. Verre feuilleté selon l'une quelconque des revendications 1 à 7, dans lequel l'épaisseur de la deuxième plaque de verre est inférieure à l'épaisseur de la première plaque de verre.

9. Verre feuilleté selon l'une quelconque des revendications 1 à 8, dans lequel l'épaisseur de la première plaque de verre est de 1,5 mm à 4,0 mm.

10. Verre feuilleté selon l'une quelconque des revendications 1 à 9, dans lequel la valeur obtenue au moyen d'une division de l'épaisseur de la deuxième plaque de verre par l'épaisseur de la première plaque de verre est de 0,1 à 0,5.

11. Verre feuilleté selon l'une quelconque des revendications 1 à 10, lequel verre feuilleté est une vitre de hublot,

    la première plaque de verre est disposée sur un côté exposé à l'extérieur, et
    la deuxième plaque de verre est disposée du côté intérieur.

12. Verre feuilleté selon l'une quelconque des revendications 1 à 11, dans lequel la deuxième plaque de verre est collée à la première plaque de verre via la couche intermédiaire dans un état où la deuxième plaque de verre est déformée élastiquement le long de la forme de la première plaque de verre.

*Fig. 1*

*Fig. 2*

*Fig. 3*

*Fig. 4*

*Fig. 5*

*Fig. 6*

*Fig. 7*

**EP 3 144 141 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013540621 T